# EUROPEAN PATENT APPLICATION

(11) **EP 3 736 710 A1**
(43) Date of publication of application: **11.11.2020**
(21) Application number: 19173735.2
(22) Date of filing: 10.05.2019
(51) Int. Cl.: G06F 16/901, G06F 16/25

(54) **METHOD AND DEVICE TO CONTROL A TECHNICAL DEVICE WITH DATA**

(71) Applicant: Siemens Aktiengesellschaft, 80333 München (DE)
(72) Inventor: HUBAUER, Thomas, 85748 garching bei München (DE)
(74) Representative: Maier, Daniel Oliver

(57) **Abstract**

Method to control a technical device (1) with data (10), wherein the data (10) are derived from a multiplicity of data triples by a predetermined data query, which data query defines a relation between at least two data triples of the multiplicity of data triples, which multiplicity of data triples define a hierarchic data structure and represent a knowledge graph with nodes and edges, and each data triple of the multiplicity of data triples is generated by a reflection design pattern mechanism and consists of a data subject, a data predicate and a data object respectively.

## Description

The invention relates to a method to control a technical device with data.

The invention relates also to a control device configured to control a technical device with data.

Industrial software products, typically Product Lifecycle Management (PLM) software, integrate information about products, components, their assembly and fabrication process, and all related processes and resources connected to the product's creation and maintenance. PLM tools often come with their own proprietary data format; stored information can be accessed either through a specialized API or exported in an XML-based format for further manual manipulation.

Nowadays the amount of data increases continuously, and in some cases a tremendous amount of information needs to be correlated in addition.

It is very difficult to access data from proprietary PLM software tools in an efficient way and subsequently, the control a technical device with such data suffers by means of efficiency.

It is the objective of the invention to improve the performance of data access and thus, to increase the efficiency at the control of a technical device with said data.

The objective of the invention is achieved by a method to control a technical device with data, wherein the data are derived from a multiplicity of data triples by a predetermined data query, which data query defines a relation between at least two data triples of the multiplicity of data triples, which multiplicity of data triples define a hierarchic data structure and represent a knowledge graph with nodes and edges, and each data triple of the multiplicity of data triples is generated by a reflection design pattern mechanism and consists of a data subject, a data predicate and a data object respectively.

Knowledge graph technologies and their capability to infer knowledge from pre-existing information, offer the possibility to run in-place complex queries over huge amounts of data. Semantic based information could leverage production processes, maintenance, services and customer interaction. To operate with, information should be available in the knowledge graph in the first place. Thus, there is the need to integrate data from different projects, even from different PLM tools, with other data, in order to run analytical software that provides answers to complex problems. Huge amounts of data, coming from different projects, and even from different PLM tools, must be put together into knowledge graphs. Obviously, this is a tremendous task that cannot be dealt with manually.

A knowledge graph is a semantic database where entities are placed in relation to each other, provided with attributes and brought into thematic context or ontologies.

The most important elements of a semantic structure are entities and ontologies. In semantics, an entity is uniquely identified by an identifier and certain properties (attributes/properties). While the identifier, mostly in the form of a series of numbers, is intended for machine identification, living things recognize entities by their properties.

The graph theory can be used for the visualization of semantic structures. Graphs comprise nodes and edges. In the context of semantics, the nodes are the entities and the edges represent the relations of different entities to each other, e.g. a "relationship context".

A graph contains all entities involved, regardless of the ontology. Edges, in addition to the mere representation of a relationship between entities, may also be used to evaluate these relationships, e.g. be used in length and thickness. A particularly pronounced relation in terms of the "thickness of the connection" can represent an intense relationship between the two entities. Also, the relationship distance of two entities to each other can be used to represent the proximity to each other. In addition, it is also possible to create a bridge to vector spaces including Euclidean distances. In other words, a graph structure could be derived by statistical methods such as vector space analyzes.

A named entity is a group of one or more words (a text element) that identifies an entity by name. For example, named entities may include persons (such as a person's given name or role), organizations (such as the name of a corporation, institution, association, government or private organization), places (locations, such as a country, state, town, geographic region, a named building, or the like), artifacts (such as names of consumer products, such as cars), temporal expressions, such as specific dates, events, and monetary expressions.

A further aspect of the invention refers to the reflection design pattern mechanism.

Reflection or introspection in programming means that a program knows its own structure and may modify it.

At the lowest level, machine code in RAM executed by a microprocessor can be said to be reflexive. Such a program can handle its instructions like data and therefore can analyze and change its structure. Reflection is often supported by frameworks or languages that run in a virtual machine, such as Java, .NET or Smalltalk, and many interpretive languages.

Reflection plays an important role in connection with type-safe programming, but also in questions of persistence (persistent data management of objects and their relationships).

Reflection, for example, allows object-oriented programming to query at runtime for information about classes or their instances, such as in Objective-C (typically called introspection there). For a method, these include their visibility, the data type of the return value, or the type of the transfer parameter. The implementation of the query options is language-specific.

For the realization of the reflection, it is necessary to store metainformation in the binary code of the program. In interpreting programming languages, the original program code is available at execution time, which not only allows access to the structure information (method declaration), but also access to the implementation. Examples are PHP, Lisp, Python, Smalltalk and Tcl.

Moreover, Java and languages for use with the .NET Framework, such as C#, Object Pascal, VB.NET or IronPython support the reflection that the .NET Framework provides on its own. All languages that use the .NET Framework must, according to the CLS (Common Language Specification), store the corresponding information as metadata.

The execution speed of code by reflection is usually less than that of static code. This is, amongst other, due to the string comparisons of the corresponding names of the desired methods, properties, etc. with the entries in the metadata. However, reflection provides very high run-time flexibility, since code can be called dynamically, new instances can be created, or even types and objects can be dynamically restructured.

In a further development of the invention it is intended that the reflection design pattern mechanism is determined based on a depth-first graph traversal algorithm.

Thus, it is achieved that the reflection design pattern mechanism is determined in a very efficient way.

Depth-first search (DFS) is an algorithm for traversing or searching tree or graph data structures. The algorithm starts at the root node (selecting some arbitrary node as the root node in the case of a graph) and explores as far as possible along each branch before backtracking.

In a further development of the invention it is intended that the data subject and the data object are respective nodes of the knowledge graph, and the data predicate is an edge of the knowledge graph.

Thus, the hierarchical data structure offers a very efficient data storage and data query performance.

In a further development of the invention it is intended that at least two data triples of the multiplicity of data triples are obtained from different data sources and transformed to the hierarchic data structure of the data triples of the multiplicity of data triples.

Thus, it is achieved that the hierarchical data structure is determined in a very efficient way.

In a further development of the invention it is intended that at least two data triples of the multiplicity of data triples are received in different data format and transformed into the data format of the data triples of the multiplicity of data triples.

Thus, it is achieved that the hierarchical data structure is determined in a very efficient way.

The objective of the invention is achieved by a control device, which is configured to control a technical device with data, wherein the data are derived by the method according to the invention.

The invention is being described by an embodiment shown in the accompanying figures, which show in
- Fig. 1: a schematic illustration of the device according to the invention,
- Fig. 2: an architecture diagram for an embodiment of a TIA portal connector,
- Fig. 3: a pseudo code example for a graph mirroring procedure,
- Fig. 4: a pseudo code example for an edge exploring function.

It is clear, that further not shown parts are necessary for the operation of the device, e.g. driver modules or power supply components. For the sake of better understanding these parts are not illustrated and described.

The invention is not restricted to the specific embodiments described in detail herein, but encompasses all variants, combinations and modifications thereof that fall within the framework of the appended claims.

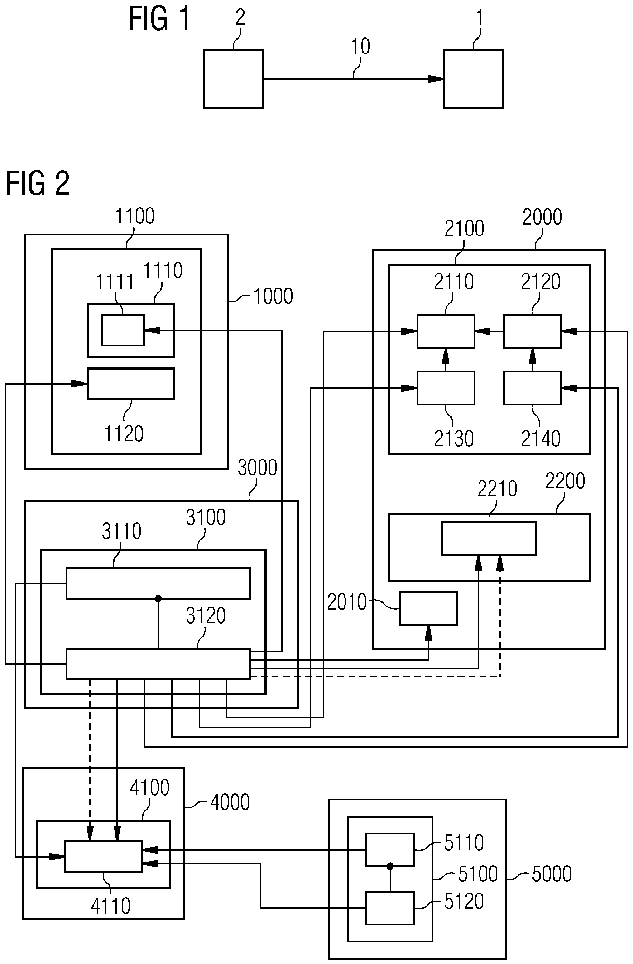

**Fig. 1** shows an embodiment of the invention with a technical device 1 and a control device 2. The control device 2 is configured to control a technical device 1 by data 10. The data 10 are derived as described below.

**Fig. 2** shows an architecture diagram of an embodiment of a TIA portal connector, which is configured to generate a hierarchic data structure for the use within the invention.

The TIA portal connector gets data from TIA Portal using the reflection graph traversal algorithm. A semantic software connector is the component that takes the data from the TIA Portal Connector, transforms it into triples, and loads the triples into a Knowledge Graph.

The diagram represents the method according to the invention, wherein the data 10 are derived from a multiplicity of data triples by a predetermined data query, which data query defines a relation between at least two data triples of the multiplicity of data triples, which multiplicity of data triples define a hierarchic data structure and represent a knowledge graph with nodes and edges, and each data triple of the multiplicity of data triples is generated by a reflection design pattern mechanism and consists of a data subject, a data predicate and a data object respectively.

The data subject and the data object are respective nodes of the knowledge graph, and the data predicate is an edge of the knowledge graph.

At least two data triples of the multiplicity of data triples are obtained from different data sources and transformed to the hierarchic data structure of the data triples of the multiplicity of data triples.

At least two data triples of the multiplicity of data triples are received in different data format and transformed into the data format of the data triples of the multiplicity of data triples.

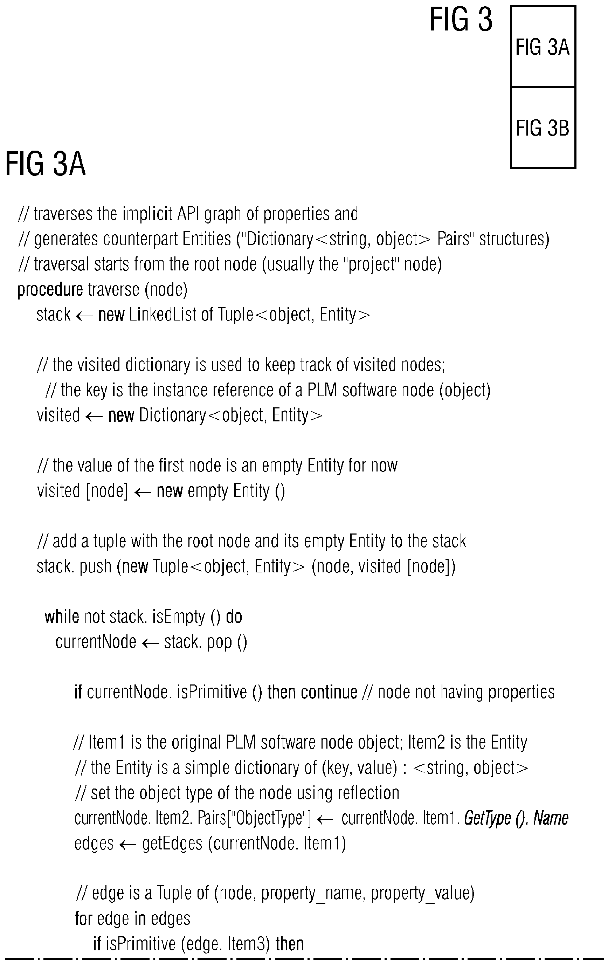

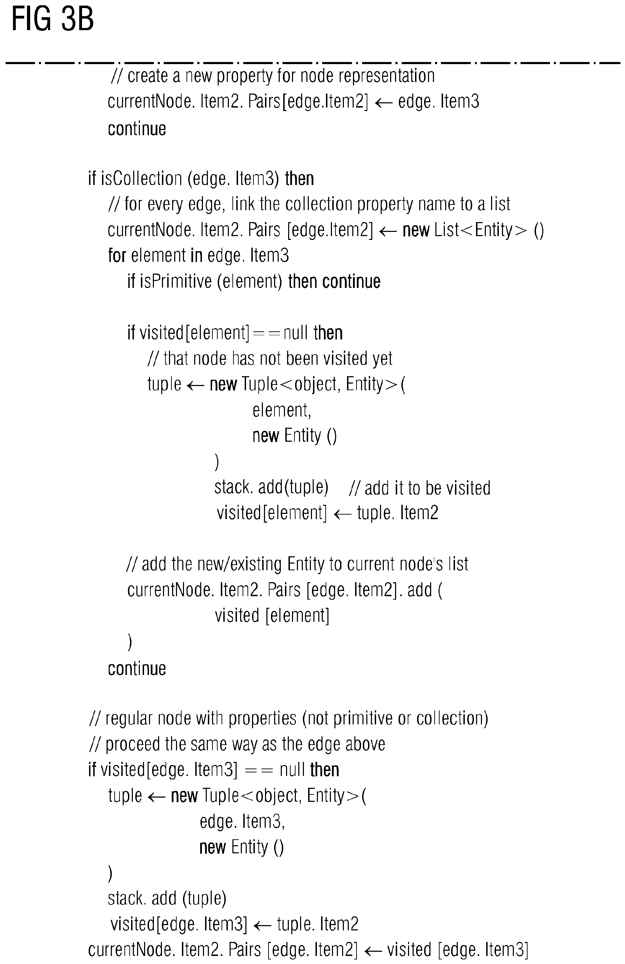

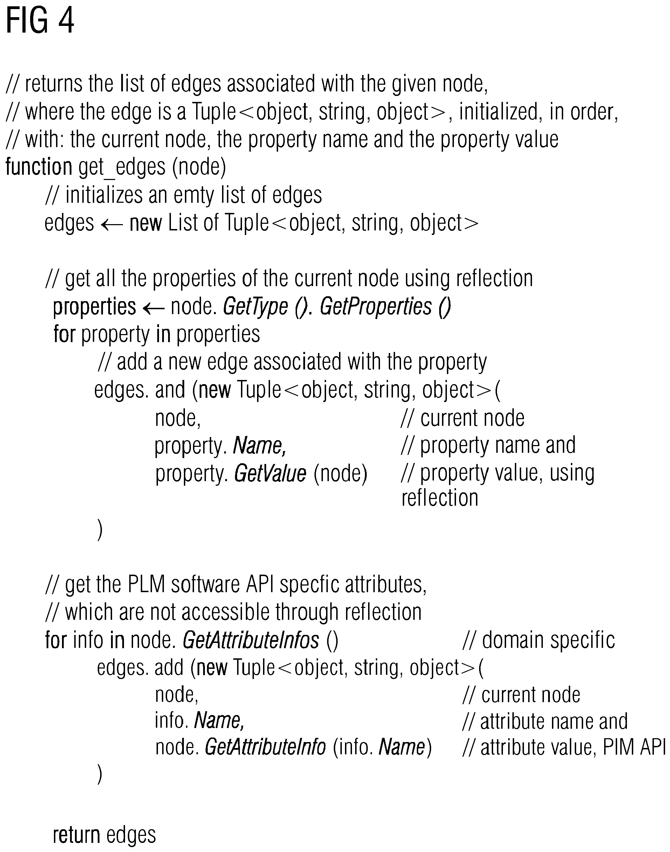

**Fig. 3** and **Fig. 4** show an embodiment of a respective pseudo program code as algorithms used in Fig. 2.

The connector is configured to translate complex hierarchies of data stored in a typical PLM platform into triples, which can be stored as a Knowledge graph.

In the context of the invention a knowledge graph is both the model and the tool used to store the data in an alternative format, RDF (Resource Description Format), as a property graph.

Knowledge graphs are schema-free, extendable, triple-based representations of information. They allow complex construction of queries to extract specific information in a more flexible and generic way than with traditional relational databases.

RDF triples are generated from the PLM data model by automatically using a reflection design pattern. The specific PLM software API can be used, and data-access related methods can be selected as candidates for the reflection design pattern.

It can be used in an automated way for depth-first graph traversal of a specific project loaded by the PLM tool.

Domain-specific knowledge of the PLM project, discovered by the reflection design pattern, can be parsed and translated into RDF triples subsequently.

The generated RDF triples can be further processed for either their export to RDF files or, they can be pushed to a RDF triple-store, such as RDF4J (http://rdf4j.org) or Blazegraph (https://www.blazegraph.com).

A "ReflectionTIAv15Algorithm" 3120 of a "TIAComponentConnectorV15.enrichment" module 3100 of a "TIAComponent.ConnectorV15" domain 3000 visits, based on a node instance (usually the project node, that contains all the sub-nodes - devices, sub-devices, lists etc. of the PLM software project), all the children nodes of the project, starting from the project (i.e. the root of the hierarchy).

The links between the nodes are considered to be the properties that connects a parent node with its children nodes (for example, a project node can have a property named "GetDevices()" that returns a list with its immediate sub-nodes, like project's devices).

An "IEntityPopulationAlgorithm" 3110 is a functional interface with one method only: "Entity populate(object obj);".

The ReflectionTIAv15Algorithm 3120 is the implementer of it. The interface has the scope of hiding the implementation details and the dependencies of the ReflectionTIAv15Algorithm 3120 from its user.

The instantiation of this reflection algorithm can be done via a factory design pattern. This allows the user of the ReflectionTIAv15Algorithm 3120 to be unaware with respect to the PLM software platform dependencies.

Dependencies on the Siemens TIA portal, namely the ReflectionTIAv15Algorithm 3120 also uses "PlcBlock" 1111 and "EngineeringAttributeInfo" 1120. The reflection-based traversal algorithm can be mixed with the product-specific data structures; but reflection can work also on its own.

The PlcBlock 1111 is located within the "Siemens.Engineering.SW.Blocks" procedure 1110, which is part of a "Siemens.Engineering" module 1100 of a "Siemens" domain 1000.

A system 2000 comprises methods "System.Reflection" 2100, "System.Collection.Generic" 2200 and a tuple 2010.

The ReflectionTIAv15Algorithm 3120 uses the Tuple 2010 <object, Entity> to represent intermediary information. It serves the purpose of converting the properties of a TIA object structure to a generic entity structure 4110, who is a mere dictionary. The first part of the tuple 2010 is the TIA portal (or specific PLM software) object, whereas the second part (entity) is the generic structure which will be filled in based on the first part of the tuple 2010.

The System.Reflection 2100 includes methods "MethodInfo" 2110, "MethodBase" 2120, "PropertyInfo" 2130 and "MemberInfo" 2140.

System.Collection.Generic 2200 includes a "LinkedList" 2210.

The ReflectionTIAv15Algorithm 3120 (graph reflection algorithm makes) use of a stack (implemented as a LinkedList) to traverse the reflection graph. Also, there are several dependencies on the Reflection API which are used:
The MemberInfo 2110 is used to get the name of a property, or of a type returned by the "object.GetType()" reflection method.

The method "object.GetType().GetProperties()" returns an array of "PropertyInfo" objects 2130, which describe the member variables with their names and values.

The MethodBase 2120 is the generic reflection method used for invoking API-specific methods given by their name, along with the MethodInfo 2140 associated structure.

The entity data structure 4110 of a "TIAProjectModel.Model" 4100 of a "TIAProjectModel" 4000 is a (key, value) dictionary-based structure, that is used to create the graph structure in an API-independent way.

The graph reflection algorithm walks through the API, reads the object properties and replicates the information grabbed in the form of an intermediary form, a graph with entity nodes.

A "SemanticTIAConnector.services.export" 5100 of a "SemanticTIAConnector" 5000 includes methods "IEntityExporter" 5110 and "RemoteStore" 5120.

The entity-based graph is further used to generate triples by the RemoteStore method 5120. Once generated, they are pushed to a triple-store graph via a SPARQL endpoint.

The IEntityExporter 5110 interface is also a functional interface, and the RemoteStore is one implementation of it. Its dependencies and implementation details are hidden using a factory design pattern that provides IEntityExporter 5110 implementations for RDF storage such as RemoteStore 5120, but it can also write to RDF or TTL files, write to the console etc.

Modeling and storing data into RDF triples lead to following advantages:
1. Storing data in a very simple format that allows easy integration between multiple distinct data sources. This format consists out of a simple triple pattern:
   (subject, predicate, object) wherein
   - Subject: is a resource,
   - Predicate: is a relationship or a property name,
   - Object: is another resource or property value.
   By storing your data as RDF triples, a graph of information is obtained, where each subject and object will be a node, and each predicate will be an edge.
   These sets of triples can be loaded into triple stores where you have the possibility of querying the data with graph pattern query languages like SPARQL. Data modeled as RDF lead to an easier integration in comparison with integration of relational databases with different kinds of complex schemas and table structures.
2. Once a knowledge graph (triple store with data) is obtained, graph pattern query languages can be used to infer information that is not stored in there or is partially stored cross different data sets.
   For example, information is extracted into RDF triples from three different tools, i.e. data sources:
   - Teamcenter (PLM tool)
   - Comos (Plant Managenent tool)
   - TIA portal (Automation Integration tool)
   Each of these tools can store data in different ways, in different formats and provide different APIs to access it via software.
   By extracting the data and store it into RDF triples, a common unique format for the data is obtained, and further, loading the triples into graphs can be easily integrated.
   Once the data is stored in graphs, queries can be made to provide answers to questions like: what are the variants and prices of the control cabinet situated in plant X, building Y, floor Z, room A?
   Giving this answer would not have been possible without integrating the data into RDF triples. The variants and prices can be found in the PLM tool and the location of the cabinet in the plant is found in the Plant Management tool.
3. Adds identity to the data, so software/human consumers of the data could distinguish between two distinct entities that have the same properties. This identification is done by enriching the data with IRIs that should reveal the data provenance.

By combining the above data into a knowledge graph new information can be discovered, like:
- What are the available alternatives that you can build certain control cabinets placed in certain locations in the plant? (Comos issue answered by Teamcenter triples)
- What mechanical devices are control by the controllers within the cabinet? What other devices are affected in the process? (Comos issue answered by Comos triples)
- Who programmed these controllers? When and how? (Comos issue answered by TIA portal triples)

As a summery, RDF triples and knowledge graphs open a new perspective when it comes to data integration and discovery. Once the data is within the graph, linking information between data sets can be found, e.g. by the RDF triple relation information, which processes control one technical device?

Graphs schemas can be created for certain types of processes. Software can be used that interacts with the data matching the schema and the software controls the process.

For each tool a connector can be implemented, that recursively goes through a specific project and creates an equivalent dictionary using a reflection design pattern.

This dictionary is converted into RDF triples and inserted into a knowledge graph by a subsequent software component "SemanticConnector". In other words, the RDF triples generator is accomplished by combining the Connector and the SemanticConnector.

For example, at the TIA portal, the TiaComponentConnectorV15 builds the dictionary and the SemanticTiaConnector converts the dictionary to RDF triples.

Basically, any data structure can be replicated into an RDF triple format that is accessible via an API, that supports the reflection design pattern, without caring about the API specifics and without the need of calling explicitly the entire data model.

The invention makes use of the reflection mechanism which is available in modern programming languages like C# and Java. Thus, it can be applied to a various implementation solution, not being dependent of a particular implementation.

One clear advantage is upward compatibility - not only one product can use the same implementation but, once one specific data model for a platform evolves, there is no need to alter the existing graph mirroring implementation as presented here; given the new data model capabilities obey the reflection mechanism, newly introduced features can be interpreted automatically by the existing implementation. The graph mirroring implementation is universal.

Also, not being dependent on domain knowledge, it eases the task of deriving knowledge graph triples - one does not have to design specific translation rules for every type of object by hand, but this can be done automatically through reflection.

One feature of the graph reflection algorithm is based on the reflection design pattern. For automatic exploration of an implicit PLM software project graph, the project model should be available in a high-level language that offers the reflection mechanism at the language level.

In addition (or as an alternative), the API of the PLM software itself should offer such features, that is to access project nodes properties information and relation to sibling nodes. This PLM-specific capability can be used instead (if it is generic enough) of or in addition to the reflection mechanism.

An embodiment of the invention can be used to automatically aggregate a great number of existing projects of PLM software, projects describing products, production processes, related resources and costs; a huge amount of information could thus be aggregated into knowledge-graph stores, in a uniform approach, opening the way for big-data analytic process.

Thus, an aggregation offers the possibility of cross-product, cross-domain leveraging of proprietary information - information which is now tied up to specific PLM platforms and projects and cannot be easily and uniformly exploited in cross-division or cross-products data analysis scenarios.

The connector architecture and graph mirroring algorithm can be described shortly by:
- the architecture proposes a generic structure and entity, simple enough to be independent of any data model but capable to store all object properties as strings; the entity is further used to generate triples to be stored into an RDF triple-store;
- the architecture uses the entity to separate the PLM software specific API dependencies from the RDF triple generation part;
- the graph reflection algorithm, a depth-first traversal variant, explores the implicit graph of project-specific objects and creates a mirrored graph of entities; this mirrored (explicit or partial) graph of entities is further explored with a classic depth-first algorithm, and triples are generated based on this information.

The graph reflection algorithm as described before is based on a depth-first graph traversal algorithm (see, for example, R. Mihalcea, D. Radev, "Graph-Based Natural Language Processing and Information Retrieval", Cambridge University Press, 2011), on the graph implicitly represented by the PLM software object structure.

Besides exploring in the classic approach, the graph reflection algorithm keeps track of visited nodes with the help of a global dictionary and fills in their entity descriptions.

### List of reference numerals:

- 1: technical device
- 2: control device
- 10: data

- 1000: Siemens domain
- 1100: Siemens.Engineering domain
- 1110: Siemens.Engineering.SW.Blocks domain
- 1111: PlcBlock
- 1120: EngineeringAttributeInfo

- 2000: System
- 2010: Tuple
- 2100: System.Reflection
- 2110: MemberInfo
- 2120: MethodBase
- 2130: PropertyInfo
- 2140: MethodInfo
- 2200: System.Collection.Generic
- 2210: LinkedList
- 3000: TIAComponent.ConnectorV15
- 3100: TIAComponentConnectorV15.enrichment
- 3110: IEntityPopulationAlgorithm
- 3120: ReflectionTIAv15Algorithm
- 4000: TIAProjectModel
- 4100: TIAProjectModel.Model
- 4110: Entiy

- 5000: SemanticTIAConnector
- 5100: SemanticTIAConnector.services.export
- 5110: IEntityExporter
- 5120: RemoteStore

## Claims

1. Method to control a technical device (1) with data (10), wherein the data (10) are derived from a multiplicity of data triples by a predetermined data query, which data query defines a relation between at least two data triples of the multiplicity of data triples,
which multiplicity of data triples define a hierarchic data structure and represent a knowledge graph with nodes and edges,
and each data triple of the multiplicity of data triples is generated by a reflection design pattern mechanism and consists of a data subject, a data predicate and a data object respectively.

2. Method according to the preceding claim, wherein the reflection design pattern mechanism is determined based on a depth-first graph traversal algorithm.

3. Method according to one of the preceding claims, wherein the data subject and the data object are respective nodes of the knowledge graph, and the data predicate is an edge of the knowledge graph.

4. Method according to one of the preceding claims, wherein at least two data triples of the multiplicity of data triples are obtained from different data sources and transformed to the hierarchic data structure of the data triples of the multiplicity of data triples.

5. Method according to one of the preceding claims, wherein at least two data triples of the multiplicity of data triples are received in different data format and transformed into the data format of the data triples of the multiplicity of data triples.

6. Control device (2) configured to control a technical device (1) with data (10), wherein the data (10) are derived by the method according to one of the preceding claims.
